# EUROPEAN PATENT APPLICATION

(11) **EP 3 742 377 A1**
(43) Date of publication of application: **25.11.2020**
(21) Application number: 20176100.4
(22) Date of filing: 22.05.2020
(51) Int. Cl.: G06Q 30/06, G06Q 50/04

(54) **COMMODITY CUSTOMIZATION METHOD, APPARATUS, DEVICE AND STORAGE MEDIUM**

(30) Priority: 22.05.2019 CN 201910431399
(71) Applicant: Zhuhai Suibian Technology Co., Ltd., Zhuhai, Guangdong 519085 (CN)
(72) Inventor: BI, Sheng, Zhuhai, Guangdong 519085 (CN); WANG, Chengqing, Zhuhai, Guangdong 519085 (CN); WANG, Yanliang, Zhuhai, Guangdong 519085 (CN); LI, Zhiyong, Zhuhai, Guangdong 519085 (CN); GUAN, Qi, Zhuhai, Guangdong 519085 (CN); GUO, Yuejing, Zhuhai, Guangdong 519085 (CN)
(74) Representative: Gill Jennings & Every LLP

(57) **Abstract**

The present invention provides a commodity customization method, apparatus and device, and a storage medium. The method includes: receiving a commodity creating request of a first user and providing a created commodity editing interface; creating a target customizable commodity according to basic information and customizable component information configured by the first user; and sending relevant information about the target customizable commodity to an E-commerce platform server. The method also includes: receiving a customization request of a second user for a target customizable commodity and providing a customization editing interface; generating a presentation image of the target customizable commodity according to a customizable component selected by the second user and customization information inputted by the second user; receiving an order request of the second user and sending basic information and the customization information about the target customizable commodity to the E-commerce platform server. Therefore, personalized customization requirements of consumers for commodities are satisfied.

## Description

### TECHNICAL FIELD

Embodiments of the present invention relate to the field of E-commerce technologies, and particularly, to a commodity customization method, apparatus, device and a storage medium.

### BACKGROUND

Along with the Internet continues to grow large, electronic commerce (E-commerce) platforms have sprung up, and consumers can stay indoors and do shopping through a series of processes such as online ordering and payment.

At present, as the consumer consumption level is increasing, the consumers have more and more requirements on differentiation and personalization to commodities, more and more consumers want to buy different commodities from others, and pursuits the unique and personalized commodity. However, at present, most E-commerce platforms merely provide the commodities with unified specifications and mass production to the consumers, which cannot satisfy personalized customization requirements of the consumers for the commodities.

### SUMMARY

Embodiments of the present invention provide a commodity customization method, apparatus, device and a storage medium to satisfy personalized customization requirements of the consumer for the commodity.

In a first aspect, an embodiment of the present invention provides a commodity customization method. The method includes steps described below.

If a modeled commodity creation request initiated by a first user is received, a first user client provides a created commodity editing interface to the first user.

The first user client creates a target customizable commodity according to commodity basic information and commodity customizable component information configured by the first user in the created commodity editing interface.

The first user client sends relevant information about the created target customizable commodity to an E-commerce platform server, so that the E-commerce platform server publishes the target customizable commodity to a second user client.

In a second aspect, an embodiment of the present invention provides a commodity customization method. The method includes steps described below.

If a customization request for a target customizable commodity initiated by a second user is received, a second user client provides a customization editing interface of the target customizable commodity to the second user.

The second user client generates a presentation image of a target customizable commodity for providing to the second user according to a customizable component selected by the second user in the customization editing interface and customization information corresponding to the customizable component inputted by the second user.

If an order request of the second user is received, the second user client sends basic information and the customization information about the target customizable commodity to an E-commerce platform server, so that the E-commerce platform server sends the basic information and the customization information about the target customizable commodity to a matching first user client for customization.

In a third aspect, a commodity customization apparatus provided in an embodiment of the present invention is applied to a first user client and includes a created commodity editing interface provision module, a customized commodity creation module and a customized commodity publishment module.

The created commodity editing interface provision module is configured for the first user client to, if a modeled commodity creation request initiated by a first user is received, provide a created commodity editing interface to the first user.

The customized commodity creation module is configured for the first user client to create a target customizable commodity according to commodity basic information and commodity customizable component information configured by the first user in the created commodity editing interface.

The customized commodity publishment module is configured for the first user client to send relevant information about the created target customizable commodity to an E-commerce platform server, so that the E-commerce platform server publishes the target customizable commodity to a second user client.

In a fourth aspect, a commodity customization apparatus provided in an embodiment of the present invention is applied to a second user client and includes a customization editing interface provision module, a commodity customization presentation module and a commodity customization request module.

The customization editing interface provision module is configured for the second user client to, if a customization request for a target customizable commodity initiated by a second user is received, provide a customization editing interface of the target customizable commodity to the second user.

The commodity customization presentation module is configured for the second user client to generate a presentation image of the target customizable commodity according to a customizable component selected by the second user in the customization editing interface and customization information corresponding to the customizable component inputted by the second user, and provide the presentation image to the second user.

The commodity customization request module is configured for the second user client to, if an order request of the second user is received, send basic information and the customization information about the target customizable commodity to an E-commerce platform server, so that the E-commerce platform server sends the basic information and the customization information about the target customizable commodity to a matching first user client for customization.

In a fifth aspect, an embodiment of the present invention provides a computer device including a memory, a processor, and computer programs stored in the memory and executable on the processor. When executing the programs, the processor implements the commodity customization method applied to a first user client according to any embodiment of the present invention.

In a sixth aspect, an embodiment of the present invention provides a computer-readable storage medium configured to store computer programs for implementing the commodity customization method applied to a first user client according to any embodiment of the present invention when executed by a processor.

In a seventh aspect, an embodiment of the present invention provides a computer device including a memory, a processor, and computer programs stored in the memory and executable on the processor. When executing the programs, the processor implements the commodity customization method applied to a second user client according to any embodiment of the present invention.

In an eighth aspect, an embodiment of the present invention provides a computer-readable storage medium configured to store computer programs for implementing the commodity customization method applied to a second user client according to any embodiment of the present invention when executed by a processor.

In a ninth aspect, an embodiment of the present invention provides a commodity customization method. The method includes steps described below.

Upon receiving a modeled commodity creation request operation of a first user, a first user client displays a created commodity editing interface.

The first user client receives a configuration operation of the first user for configuring commodity basic information and commodity customizable component information of a target customizable commodity in the created commodity editing interface.

The first user client creates the target customizable commodity and generates relevant information about the target customizable commodity according to the commodity basic information and the commodity customizable component information.

The first user client sends relevant information about the created target customizable commodity to an E-commerce platform server, so that the E-commerce platform server publishes the target customizable commodity to a second user client.

In a tenth aspect, an embodiment of the present invention provides a commodity customization method. The method includes steps described below.

Upon receiving a customization request operation for a target customizable commodity from a second user, a second user client displays a customization editing interface of the target customizable commodity to the second user.

The second user client receives a customization operation of the second user for customizing the target customizable commodity in a customization editing interface, the customization operation including to select a customizable component of the target customizable commodity and to input customization information of the selected customizable commodity.

The second user client generates a presentation image of the target customizable commodity according to the selected customizable component and the inputted customization information of the customization operation of the second user in the customization editing interface, and displays the presentation image.

Upon receiving an order request of the second user, the second user client sends basic information and the customization information about the target customizable commodity to an E-commerce platform server, so that the E-commerce platform server sends the basic information and the customization information about the target customizable commodity to a matching first user client for customization.

In an eleventh aspect, a commodity customization apparatus provided in an embodiment of the present invention is applied to a first user client and includes a created commodity editing interface provision module, a configuration operation reception module, a customized commodity creation module and a customized commodity publishment module.

The created commodity editing interface provision module is configured to, upon receiving a modeled commodity creation request operation of a first user, display a created commodity editing interface.

The configuration operation reception module is configured to receive a configuration operation of the first user for configuring commodity basic information and commodity customizable component information of a target customizable commodity in the created commodity editing interface.

The customized commodity creation module is configured to create the target customizable commodity and generates relevant information about the target customizable commodity according to the commodity basic information and the commodity customizable component information.

The customized commodity publishment module is configured to send relevant information about the created target customizable commodity to an E-commerce platform server, so that the E-commerce platform server publishes the target customizable commodity to a second user client.

In a twelfth aspect, a commodity customization apparatus provided in an embodiment of the present invention is applied to a second user client and includes a customization editing interface provision module, a customization operation reception module, a commodity customization presentation module and a commodity customization request module.

The customization editing interface provision module is configured to, upon receiving a customization request operation for a target customizable commodity from a second user, display a customization editing interface of the target customizable commodity to the second user.

The customization operation reception module is configured to receive a customization operation of the second user for customizing the target customizable commodity in a customization editing interface, the customization operation including to select a customizable component of the target customizable commodity and to input customization information of the selected customizable commodity.

The commodity customization presentation module is configured to generate a presentation image of the target customizable commodity according to the selected customizable component and the inputted customization information of the customization operation of the second user in the customization editing interface, and display the presentation image.

The commodity customization request module is configured to, upon receiving an order request of the second user, send basic information and the customization information about the target customizable commodity to an E-commerce platform server, so that the E-commerce platform server sends the basic information and the customization information about the target customizable commodity to a matching first user client for customization.

In technical solutions provided in the embodiments of the present invention, when the first user needs to publish the customizable commodity on the E-commerce platform, the first user first initiates a modeled commodity creation request in the first user client, then configures the basic information about the customizable commodity and the customizable component information about the customizable commodity in the created commodity editing interface provided by the first user client, so that after the creation of the customizable commodity is completed, the first user client sends the relevant information about the created customizable commodity to the E-commerce platform server, and such that the E-commerce platform server publishes the created customizable commodity to the second user client. Furthermore, when the second user has a customization requirement for the customizable commodity, the second user first initiates a customization request for the customizable commodity in the second user client, then selects a customization portion and inputs customization information corresponding to the customization portion in the customization editing interface provided by the second user client, such that the second user client completes the customization for the customizable commodity; when the second user places an order for purchase, the second user client sends the basic information and customization information about the customizable commodity to the E-commerce platform server, such that the E-commerce platform server sends the information to the first user client for the first user to carry out customization production, thereby satisfying personalized customization requirements of the consumer user (i.e., the second user) for the commodity.

### BRIEF DESCRIPTION OF DRAWINGS

FIG 1 is a flowchart of a commodity customization method according to embodiment one of the present invention;
FIG. 2 is a flowchart of a commodity customization method according to embodiment two of the present invention;
FIG. 3 is a flowchart of a commodity customization method according to embodiment three of the present invention;
FIG. 4 is a schematic structural diagram of a commodity customization apparatus according to embodiment four of the present invention;
FIG. 5 is a schematic structural diagram of a commodity customization apparatus according to embodiment five of the present invention;
FIG. 6 is a structural diagram of hardware structure of a computer device according to embodiment six of the present invention;
FIG. 7 is a flowchart of a commodity customization method according to embodiment eight of the present invention;
FIG. 8 is a flowchart of a commodity customization method according to embodiment nine of the present invention;
FIG. 9 is a schematic structural diagram of a commodity customization apparatus according to embodiment ten of the present invention; and
FIG. 10 is a schematic structural diagram of a commodity customization apparatus according to embodiment eleven of the present invention.

### DETAILED DESCRIPTION

Hereinafter the present invention will be further described in detail in conjunction with the drawings and embodiments. It is to be understood that the specific embodiments set forth below are intended to illustrate and not to limit the present invention. Additionally, it is to be noted that, for ease of description, only part, not all, of the structures related to the present invention are illustrated in the drawings.

Before exemplary embodiments are discussed in more detail, it should be noted that part of the exemplary embodiments are described as processes or methods depicted in flowcharts. Although the flowcharts describe the operations (steps) as sequential processes, many of the operations may be implemented concurrently, coincidently or simultaneously. Additionally, the sequence of the operations may be rearranged. Each of the processes may be terminated when the operations are completed, but may further have additional steps not included in the drawings. Each of the processes may correspond to one of a method, a function, a procedure, a subroutine, a subprogram, etc.

### Embodiment one

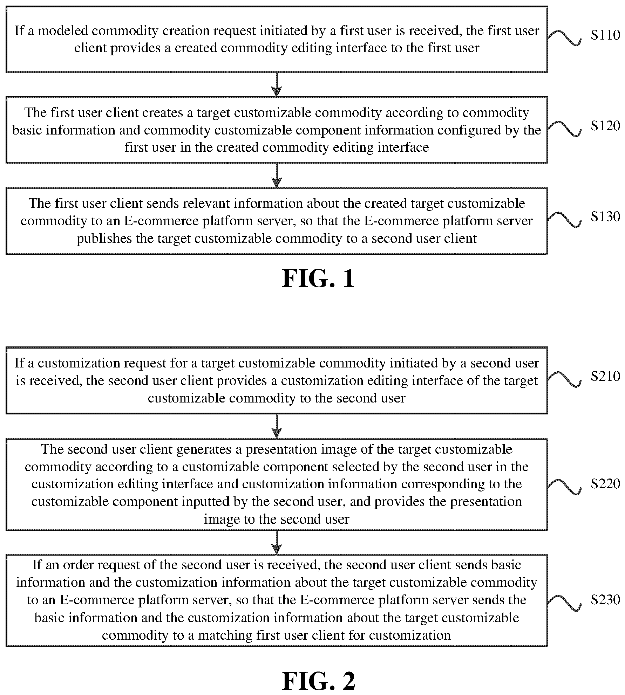

FIG. 1 is a flowchart of a commodity customization method according to embodiment one of the present invention. This embodiment is applicable to a case where merchant user creates and puts on shelves a customizable commodity by using an E-commerce merchant user client. The method may be executed by a commodity customization apparatus applied to a first user client provided in the embodiments of the present invention. The apparatus may be implemented by software and/or hardware, and may be generally integrated into a processor of a computer device, such as a processor of the computer device running the E-commerce platform merchant user client (a first user client).

As shown in FIG. 1, the method in the embodiment specifically includes steps described below.

In step S110, if a modeled commodity creation request initiated by a first user is received, the first user client provides a created commodity editing interface to the first user.

The first user refers to the merchant user of the E-commerce platform; correspondingly, the first user client refers to an E-commerce platform client configured for the merchant user to perform operations such as order management, production and delivery, commodity management, logistics management, financial management, etc., and the E-commerce platform client may be a web version client, an APP (Application) version client on a mobile terminal side, etc.

A second user refers to a consumer user of the E-commerce platform; correspondingly, the second user client refers to an E-commerce platform client configured for the consumer user to perform operations such as commodity browsing, commodity customization, commodity management, ordering and payment, etc. The second user client may be a web version client, an APP (Application) version client on a mobile terminal side, a WeChat applet, an Alipay applet, etc.; and forms of the E-commerce platform client are not specifically limited in the embodiment.

The first user may log into the first user client to create a commodity. Specifically, after the first user selects a modeled commodity and clicks to create in a commodity creation interface in the first user client, i.e., the first user sends a modeled commodity creation request to the first user client, the first user client provides the created commodity editing interface to the first user, at this time, the first user client jumps from the commodity creation interface to the created commodity editing interface. The modeled commodity refers to a model commodity which is established in advance by the E-commerce platform according to commodity categories.

In step S120, the first user client creates a target customizable commodity according to commodity basic information and commodity customizable component information configured by the first user in the created commodity editing interface.

The commodity basic information generally refers to one or more items of following information: a commodity name, a commodity short title, a commodity type, a commodity category, a commodity selling point, a commodity inventory manner, etc.

If the commodity created by the first user is a customizable commodity, and the first user needs to configure the commodity customizable component information in the created commodity editing interface. The commodity customizable component information refers to the relevant information about the customizable component in the customizable commodity, e.g., which component in the customizable commodity is customizable, a customization schematic of each customizable component. The commodity customizable component information may also include other relevant information, such as customization price information, customization generation cycle information, etc.

The use of a glasses commodity A is taken as an example for description as follows. A glasses commodity A needs be formed of a glasses frame and two glasses legs. The glasses frame is formed of lenses, a frame and nose pads. A glasses leg is formed of an ear pad, a leg frame and leg paint. A lens consumes one piece of resin, and one frame consumes 2^{∗}0.05 gram of titanium. The nose pads consume 0.05 gram of soft material. The ear pads consume 0.05 gram of soft material, the leg frames consume 2^{∗}0.05 gram of titanium, the leg paint consumes a bag of spray paint. The lens, the frame, the nose pad, the ear pads, the leg frames, the leg paint and the like belong to components constituting the glasses commodity A, and the first user may configure some of these components as customizable components to provide personalized customization functions to the second user (the consumer user); for example, the frame, the leg frames and leg paint are taken as the customizable components, the frame may have a square or round shape, the leg paint may be black, blue or other colors, the leg frame may be selected from different materials, and the like.

As a specific embodiment of the present embodiment, before S120, the commodity customization method provided in the present embodiment further includes a step described below. The first user client receives a customization rule corresponding to each customizable component configured by the first user in the created commodity editing interface, the customization rule includes a material customization rule and/or a lettering customization rule.

When the customizable component information is configured, the first user also needs to configure the customization rule corresponding to each customizable component respectively, and the personalized customization information proposed by the second user for the customizable component needs to satisfy the corresponding customization rule. For example, the material of the customizable component leg frames of the glasses commodity A may be selected from different materials, and the first user may set a material customization rule during configuration of the customizable component leg frames; specifically, the material customization rule may provide material options for the second user to select, and the second user cannot customize the customizable component leg frames with materials other than the options.

Typically, the first user may add details for the glasses commodity; after name of the details is inputted, clicks a related material button; after a glasses material is the material name and the material type selected by the first user, a save related button is clicked, and then the first user client records relevant information to a database.

For example, personalized lettering may be performed on the customizable component leg frame of glasses commodity A. The first user sets the lettering customization rule when the customizable component leg frame is configured, specifically, the lettering customization rule may be a lettering character font customization rule, a lettering character number customization rule, etc. For example, a lettering character font should be an English character, and the number of lettering characters is not more than n (for example, the number of lettering characters is not more than 5).

After the customizable component information is configured completion, the first user may further configure a specification attribute of the commodity, information such as frame width, a suitable continuous width range, myopic interpupillary distance, hyperopic interpupillary distance and the like. After the first user clicks a save configuration button, the first user client records specification information into frame information about the glasses commodity A and stores the frame information in the database.

As another specific embodiment of the present embodiment, the S120 may be further specified as following. The first user client creates a presentation model of the target customizable commodity according to the commodity basic information, the commodity customizable component information and a 3D commodity model configured by the first user in the created commodity editing interface.

After the basic information the customizable component information and the specification information about the commodity are configured, the first user selects a 3D model (made offline in advance) corresponding to the commodity, selects matching material information about each component, and after a rendering schematic diagram button is clicked, a 3D presentation model of the target customizable commodity is generated, and the 3D presentation model effect is the presentation effect of the target customizable commodity in the second user client.

In step S130, the first user client sends relevant information about the created target customizable commodity to an E-commerce platform server, so that the E-commerce platform server publishes the target customizable commodity to a second user client.

After the first user has created the target customizable commodity, the first user client sends the relevant information about the target customizable commodity to the E-commerce platform server, specifically, the basic information, the specification information and the customizable component information about the target customizable commodity are sent to the E-commerce platform server, and then, the E-commerce platform server publishes the target customizable commodity on the E-commerce platform, the second user can view the target customizable commodity in the second user client used by the second user, and the personalized customization can be performed when the second user has the customization requirement.

In technical solutions provided in the embodiments of the present invention, when the first user wants to publish the customizable commodity on the E-commerce platform, the first user first initiates a modeled commodity creation request in the first user client, then configures the basic information about the customizable commodity and the customizable component information about the customizable commodity in the created commodity editing interface provided by the first user client, so that after the creation of the customizable commodity is completed, the first user client sends the relevant information about the created customizable commodity to the E-commerce platform server, and such that the E-commerce platform server publishes the created customizable commodity to the second user client. Furthermore, when the second user has the customization requirement for the customizable commodity, the second user can perform the personalized customization for the target customizable commodity in the second user client, and place an order for payment and purchase, thereby the E-commerce platform satisfies the personalized customization requirement of the consumer user (i.e., the second user) for the commodity.

### Embodiment two

FIG. 2 is a flowchart of a commodity customization method according to embodiment two of the present invention. This embodiment is applicable to a case where a consumer user customizes and purchases a customizable commodity by using an E-commerce platform consumer user client. The method may be executed by a commodity customization apparatus applied to a second user client provided in the embodiments of the present invention. The apparatus may be implemented by software and/or hardware, and may be generally integrated into a processor of a computer device, such as integrated into a processor of the computer device running an E-commerce platform consumer user client (a second user client).

As shown in FIG. 2, the method in the embodiment specifically includes steps described below.

In step S210, if a customization request for a target customizable commodity initiated by a second user is received, the second user client provides a customization editing interface of the target customizable commodity to the second user.

The second user refers to a consumer user of the E-commerce platform; correspondingly, the second user client refers to the E-commerce platform client configured for the consumer user to perform operations such as commodity browsing, commodity customization, commodity management, ordering and payment, etc. For example, the second user client may be a web version client, an APP (Application) version client on a mobile terminal side, a WeChat applet, an Alipay applet, etc., and forms of the E-commerce platform client are not specifically limited in the embodiment.

The first user refers to a merchant user E-commerce platform; correspondingly, the first user client refers to the E-commerce platform client configured for the merchant user to perform operations such as order management, production and delivery, commodity management, logistics management, financial management, etc., and the E-commerce platform client may be a web version client, an APP version client on a mobile terminal side, etc.

After the first user creates the target customizable commodity at the first user client and publishes the target customizable commodity through the E-commerce platform server, the second user may view the target customizable commodity in the second user client and perform a personalized customization operation in the second user client.

The second user selects an immediate customization commodity option for the target customizable commodity selected by the second user to perform a customization operation, for example, the second user clicks an "Immediate Customization Commodity" physical or virtual button. The entrance of the customization operation is not specifically limited in the present embodiment. Then the second user client jumps to the customization commodity editing interface, in which the second user will visually observe changes before and after customization of the target customizable commodity.

In step S220, the second user client generates a presentation image of the target customizable commodity according to a customizable component selected by the second user in the customization editing interface and customization information corresponding to the customizable component inputted by the second user, and provides the presentation image to the second user.

The second user selects the customizable component to be customized in the customization editing interface, and inputs corresponding personalized customization information, such as adding a custom picture or text, and the like. The second user client generates the presentation image of the customized target customizable commodity according to the customizable component selected by the second user and the corresponding customization information, and provides a commodity style of the customized target customizable commodity to the second user to review, such that the user has more intuitive feelings.

Furthermore, in the embodiment, the step S220 further may be specifically as follows. The second user client generates a 3D presentation image of the target customizable commodity according to the customizable component selected by the second user in the customization editing interface and the customization information corresponding to the customizable component inputted by the second user, and provides the 3DD presentation image to the second user.

After the second user selects the customizable component to be customized in the customization editing interface and inputs the corresponding personalized customization information, the second user client generates the 3D commodity presentation image customized to the target customizable commodity the commodity style customized to the customizable commodity according to the customizable component selected by the second user and the corresponding customization information in combination with the 3D presentation model of the target customizable commodity, and provides the 3D commodity presentation image to the second user to view, such that the second user can clearly view each component of the commodity, especially the personalized customization component, at any angle.

As a specific embodiment of the present embodiment, before S220, the commodity customization method provided in the present embodiment further includes a step described below. The second user client pops up a customization float layer corresponding to the customizable component according to the customizable component selected by the second user in the customization editing interface, and the second user client acquires the customization information corresponding to the customizable component inputted by the second user in the customization float layer.

Specifically, after the second user client jumps to the customization commodity editing interface (the customization interface presents a plus sign, i.e., "+", at the customizable component by default), the second user clicks the plus sign "+" button corresponding to the customizable component which the second user wants to customize, and the second user client pops up the customization float layer corresponding to the customizable component, where customization function options, such as a material customization function, a lettering customization function or a chartlet customization function, are presented in the customization float layer. When the material customization function is selected, the second user may select a desired material among candidate materials related to the customizable component; when the lettering customization function is selected, the second user customizes characters to be engraved on the customizable component; and when the chartlet customization function is selected, the second user may choose to take a photo to generate a personalized chartlet or select a personalized chartlet in an album.

Specifically, the customization information may be the material customization information, and may also be the lettering customization information; at the same time, the customization information needs to conform to a customization rule configured by a matching first user.

Typically, the lettering customization information includes at least one of character content customization information or character form customization information.

For example, the lettering customization rule configured by the first user is that the custom text is written in English and is limited to 5 characters at maximum, and when the second user selects the lettering customization function, the added lettering customization information needs to conform to the lettering customization rule, such as adding lettering "lucky". Furthermore, the second user may also set the form of characters in the lettering customization information, such as which form of artistic characters will be presented in the lettering.

In step S230, if an order request of the second user is received, the second user client sends basic information and the customization information about the target customizable commodity to an E-commerce platform server, so that the E-commerce platform server sends the basic information and the customization information about the target customizable commodity to a matching first user client for customization.

After the customization information is set by the second user, an order operation is performed for the target customizable commodity. The second user client receives the order request of the second user, and the second user records the customization information about the target customizable commodity, and sends to the E-commerce platform server together with the basic information about the target customizable commodity, such that the E-commerce platform server sends the information to the first user client to notify the first user for customization production.

In the technical solution provided in the embodiment, after the first user creates the customizable commodity through the first user client, the E-commerce platform publishes the customizable commodity. When the second user has a customization requirement for the customizable commodity, the second user client first initiates a customization request for the customizable commodity, then selects a customization portion and inputs customization information corresponding to the customization portion in the customization editing interface provided by the second user client, such that the second user client completes customization for the customizable commodity. When the second user places an order for purchase, the second user client sends the basic information and customization information about the customizable commodity to the E-commerce platform server, such that the E-commerce platform server sends the information to the first user client for the first user to carry out customization production, thereby the consumer (i.e., the second user) can purchase the commodity with the personalized customization information, and thus satisfying personalized customization requirements of the consumer user for the commodity.

### Embodiment three

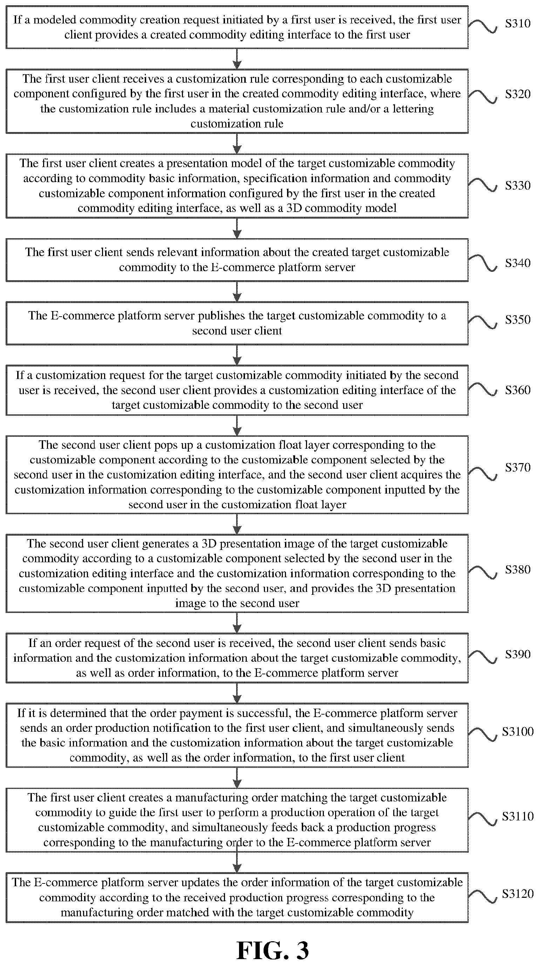

FIG. 3 is a flowchart of a commodity customization method according to embodiment three of the present invention. The embodiment provides a specific embodiment based on the above embodiments. The commodity customization method provided in the embodiment is executed by a commodity customization system provided in the embodiment, where the commodity customization system includes an E-commerce platform server, a first user client and a second user client.

As shown in FIG. 3, the method in the embodiment specifically includes steps described below.

In step S310, if a modeled commodity creation request initiated by a first user is received, the first user client provides a created commodity editing interface to the first user.

In step S320, the first user client receives a customization rule corresponding to each customizable component configured by the first user in the created commodity editing interface, where the customization rule includes a material customization rule and/or a lettering customization rule.

In step S330, the first user client creates a presentation model of the target customizable commodity according to commodity basic information, specification information, commodity customizable component information and a 3D commodity model configured by the first user in the created commodity editing interface.

In step S340, the first user client sends relevant information about the created target customizable commodity to the E-commerce platform server.

In step S350, the E-commerce platform server publishes the target customizable commodity to the second user client.

In step S360, if the customization request for the target customizable commodity initiated by the second user is received, the second user client provides a customization editing interface of the target customizable commodity to the second user.

In step S370, the second user client pops up a customization float layer corresponding to the customizable component according to the customizable component selected by the second user in the customization editing interface, and acquires the customization information corresponding to the customizable component inputted by the second user in the customization float layer.

Specifically, the customization information may be material customization information, and may also be lettering customization information; the lettering customization information includes at least one of character content customization information or character form customization information. At the same time, the customization information needs to conform to a customization rule configured by a matching first user.

In step S380, the second user client generates a 3D presentation image of the target customizable commodity according to a customizable component selected by the second user in the customization editing interface and the customization information corresponding to the customizable component inputted by the second user, and provides the 3D presentation image to the second user.

In step S390, if an order request of the second user is received, the second user client sends basic information and the customization information about the target customizable commodity, as well as order information, to the E-commerce platform server.

For example, after the second user selects the customization information such as lettering, the second user performs an ordering operation by using the second user client; when the second user places the order, the second user client stores the customization information such as lettering, etc., of the second user into a database.

In step S3100, if it is determined that the order payment is successful, the E-commerce platform server sends an order production notification to the first user client, and simultaneously sends the basic information and the customization information about the target customizable commodity, as well as the order information, to the first user client.

Specifically, the E-commerce platform server may send the order production notification to the first user client through a Message Queue (MQ) manner, and may also feedback the order production notification to the first user client through the Remote Procedure Call (RPC) manner. The manner of sending the order production notification may also be a short message manner, a push message manner, a WeChat template message manner, an applet message manner, and the like, which are not specifically limited in the embodiment.

After the second user successfully pays, the E-commerce platform server notifies the corresponding first user client through the MQ manner that the target customizable commodity may be generated, and simultaneously synchronizes the order information, the basic information about the target customizable commodity, and the customization information such as lettering to the first user client.

In step S3110, the first user client creates a manufacturing order matching the target customizable commodity to guide the first user to perform a production operation of the target customizable commodity, and simultaneously feeds back a production progress corresponding to the manufacturing order to the E-commerce platform server.

The first user client creates the manufacturing order according to the synchronized information, and performs the production operation of the target customizable commodity. Specifically, after the first user confirms the production, the first user client may notify the E-commerce platform server to change an order status to in-production through the MQ manner, and further notify the second user that the customized order of the second user has begun to produce.

The first user begins to produce according to the manufacturing order information, and in the final stage of production, performs customization production according to the personalized customization information in the manufacturing order. For example, in the production process, the first user separately adds a process for the second user according to a lettering information requirement of the second user to satisfy the lettering requirement in consumption. It is assumed that the second user orders a draw-bar box and requires a word "lucky" to be engraved at a draw-bar, the first user engraves a personalized word "lucky" required by the user at the corresponding draw-bar according to the requirement.

After the lettering is completed, the production of the target customizable commodity is completed, and the first user contacts a logistics company to delivery to the second user according to delivery information in the manufacturing order or the order.

In step S3120, the E-commerce platform server updates the order information of the target customizable commodity according to the received production progress corresponding to the manufacturing order matched with the target customizable commodity.

For details that are not explained in the embodiment, reference may be made to the foregoing embodiments, which is not repeated herein.

In the above technical solution, consumers can achieve flexible customization for the customizable commodity, not only can customize the material of the customizable component, but also can carry out lettering on a specific customizable component, thus can have their personalized customization commodity, and the personalized customization requirement of the consumers for the commodity is satisfied. This flexible customized commodity manner allows to both satisfy unique requirements of the consumers and collect consumer personalized requirement data, so as to provide better customization service through the analysis of massive consumer personalized data information.

### Embodiment four

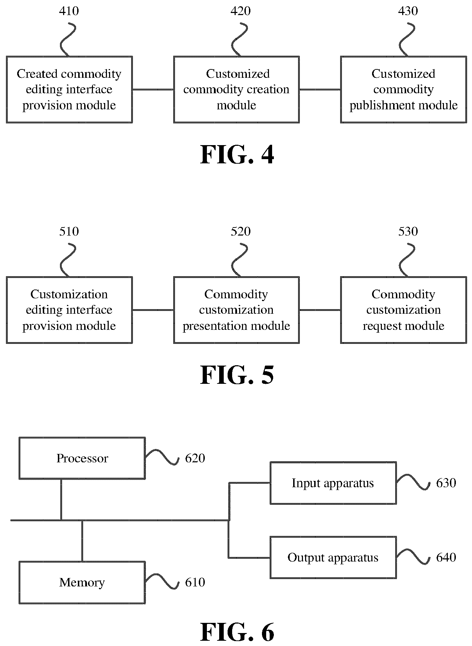

FIG. 4 is a schematic structural diagram of a commodity customization apparatus according to embodiment four of the present invention. This embodiment is applicable to a case where merchant user creates and shelves a customizable commodity in an E-commerce merchant user client. The apparatus may be implemented by software and/or hardware, and may be generally integrated into a processor of a computer device, such as a processor of the computer device running the E-commerce platform merchant user client (a first user client).

As shown in FIG. 4, the commodity customization apparatus is applied to the first user client and specifically includes a created commodity editing interface provision module 410, a customized commodity creation module 420 and a customized commodity publishment module 430.

The created commodity editing interface provision module 410 is configured for the first user client to, if a modeled commodity creation request initiated by a first user is received, provide a created commodity editing interface to the first user.

The customized commodity creation module 420 is configured for the first user client to create a target customizable commodity according to commodity basic information and commodity customizable component information configured by the first user in the created commodity editing interface.

The customized commodity publishment module 430 is configured to send, by the first user client, relevant information about the created target customizable commodity to an E-commerce platform server, so that the E-commerce platform server publishes the target customizable commodity to a second user client.

In technical solutions provided in the embodiments of the present invention, when the first user wants to publish the customizable commodity on the E-commerce platform, the first user first initiates a modeled commodity creation request in the first user client, then configures the basic information about the customizable commodity and the customizable component information about the customizable commodity in the created commodity editing interface provided by the first user client, so that after the creation of the customizable commodity is completed, the first user client sends the relevant information about the created customizable commodity to the E-commerce platform server, and such that the E-commerce platform server publishes the created customizable commodity to the second user client. Furthermore, when the second user has the customization requirement for the customizable commodity, the second user can perform the personalized customization for the target customizable commodity in the second user client and place an order for payment and purchase, thereby the E-commerce platform satisfies the personalized customization requirement of the consumer (i.e., the second user) for the commodity.

Furthermore, the above commodity customization apparatus further includes a customization rule reception module. The customization rule reception module is configured for the first user client to, before the first user client creates the target customizable commodity according to the commodity basic information and the commodity customizable component information configured by the first user in the created commodity editing interface, receive a customization rule corresponding to each customizable component configured by the first user in the created commodity editing interface, where the customization rule includes a material customization rule and/or a lettering customization rule.

Furthermore, the customized commodity creation module 420 is specifically configured for the first user client to create a presentation model of the target customizable commodity according to the commodity basic information and the commodity customizable component information configured by the first user in the created commodity editing interface, as well as a 3D commodity model.

The above commodity customization apparatus can execute the commodity customization method applied to the first user client provided by any embodiment of the present invention, and has functional modules and beneficial effects of the commodity customization method.

### Embodiment five

FIG. 5 is a schematic structural diagram of a commodity customization apparatus according to embodiment five of the present invention. This embodiment is applicable to a case where a consumer user customizes and purchases a customizable commodity in an E-commerce consumer user client. The apparatus may be implemented by software and/or hardware, and may be generally integrated into a processor of a computer device, such as a processor of the computer device running the E-commerce platform consumer user client (a second user client).

As shown in FIG. 5, the commodity customization apparatus is applied to the second user client and specifically includes a customization editing interface provision module 510, a commodity customization presentation module 520 and a commodity customization request module 530.

The customization editing interface provision module 510 is configured for the second user client to, if a customization request for a target customizable commodity initiated by the second user is received, provide a customization editing interface of the target customizable commodity to the second user.

The commodity customization presentation module 520 is configured for the second user client to generate a presentation image of the target customizable commodity according to a customizable component selected by the second user in the customization editing interface and customization information corresponding to the customizable component inputted by the second user, and provide the presentation image to the second user.

The commodity customization request module 530 is configured for the second user client to, if an order request of the second user is received, send basic information and the customization information about the target customizable commodity to an E-commerce platform server, so that the E-commerce platform server sends the basic information and the customization information about the target customizable commodity to a matching first user client for customization.

In the technical solution provided in the embodiment, after the first user creates the customizable commodity through the first user client, the E-commerce platform publishes the customizable commodity. When the second user has a customization requirement for the customizable commodity, the second user client first initiates a customization request for the customizable commodity, then selects a customization portion and inputs customization information corresponding to the customization portion in the customization editing interface provided by the second user client, such that the second user client completes customization for the customizable commodity. When the second user places an order for purchase, the second user client sends the basic information and customization information about the customizable commodity to the E-commerce platform server, such that the E-commerce platform server sends the information to the first user client for the first user to carry out customization production, thereby the consumer (i.e., the second user) can purchase the commodity with the personalized customization information, and thus satisfying personalized customization requirements of the consumer user for the commodity.

Furthermore, the above commodity customization further includes a customization information reception module. Before the second user client generates the presentation image of the target customizable commodity according to the customizable component selected by the second user in the customization editing interface and the customization information corresponding to the customizable component inputted by the second user and provide the presentation image to the second user, the customization information reception module is configured for she second user client to pop up a customization float layer corresponding to the customizable component according to the customizable component selected by the second user in the customization editing interface, and for the second user client to acquire customization information corresponding to the customizable component inputted by the second user in the customization float layer.

Specifically, the customization information includes the material customization information and/or the lettering customization information, where the customization information conforms to a customization rule configured by a matching first user.

Furthermore, the lettering customization information includes at least one of character content customization information or character form customization information.

Furthermore, the commodity customization presentation module 520 is specifically configured for the second user client to generate a 3D presentation image of the target customizable commodity according to the customizable component selected by the second user in the customization editing interface and the customization information corresponding to the customizable component inputted by the second user, and provide the 3D presentation image to the second user.

The above commodity customization apparatus can execute the commodity customization method applied to the second user client provided by any embodiment of the present invention, and has functional modules and beneficial effects of the commodity customization method.

### Embodiment six

FIG. 6 is a structural diagram of hardware structure of a computer device according to embodiment six of the present invention. As shown in FIG. 6, the device includes one or more processors 610 and a memory 620. One processor 610 is used as an example in FIG. 6.

The computer device may further include an input apparatus 630 and an output apparatus 640.

The processor 610, the memory 620, the input apparatus 630, and the output apparatus 640 in the computer device may be connected via a bus or in other manners. FIG. 6 uses connection via a bus as an example.

The memory 620 acts as a non-transitory computer-readable storage medium for storing software programs, computer-executable programs, and modules, such as program instructions/modules (e.g., the created commodity editing interface provision module 410, the customized commodity creation module 420, and the customized commodity publishment module 430 shown in FIG. 4) corresponding to the commodity customization method applied to a first user client in the embodiment of present invention, and program instructions/modules (e.g., the customization editing interface provision module 510, the commodity customization presentation module 520, and the commodity customization request module 530 shown in FIG. 5) corresponding to a commodity customization method applied to the second user client in the embodiment of the present invention. The processor 610 runs the software programs, instructions and modules stored in the memory 620 to execute function applications and data processing of the computer device, that is, to implement the commodity customization method applied to the first user client or the commodity customization method applied to the second user client in the method embodiments described above.

The memory 620 may include a program storage region and a data storage region, where the program storage region may store an operating system and an application program required by at least one function while the data storage region may store data created according to use of the computer device. In addition, the memory 620 may include a high-speed random access memory and a non-transitory memory, such as at least one disk memory, a flash memory or other non-transitory solid-state storage devices. In some embodiments, the memory 620 optionally includes memories which are remotely disposed relative to the processor 610 and these remote memories may be connected to a terminal device via a network. Examples of the above network include, but are not limited to, the Internet, an intranet, a local area network, a mobile communication network and a combination thereof.

The input apparatus 630 may be used for receiving inputted digital or character information and for generating key signal input related to user settings and function control of the computer device. The output apparatus 640 may include display devices such as a display screen.

### Embodiment seven

The embodiment seven of the present invention further provides a storage medium including computer-executable instructions which, when executed by a computer processor, implement a commodity customization method applied to a first user client. The method includes steps described below.

If a modeled commodity creation request initiated by a first user is received, the first user client provides a created commodity editing interface to the first user.

The first user client creates a target customizable commodity according to commodity basic information and commodity customizable component information configured by the first user in the created commodity editing interface.

The first user client sends relevant information about the created target customizable commodity to an E-commerce platform server, so that the E-commerce platform server publishes the target customizable commodity to a second user client.

In an alternative embodiment, the computer-executable instructions, when executed by the computer processor, are used for executing a commodity customization method applied to a second user client.

If a customization request for the target customizable commodity initiated by a second user is received, the second user client provides a customization editing interface of the target customizable commodity to the second user.

The second user client generates a presentation image of a target customizable commodity according to a customizable component selected by the second user in the customization editing interface and customization information corresponding to the customizable component inputted by the second user, and provides the presentation image to the second user.

If an order request of the second user is received, the second user client sends basic information and the customization information about the target customizable commodity to an E-commerce platform server, so that the E-commerce platform server sends the basic information and the customization information about the target customizable commodity to a matching first user client for customization.

Optionally, the computer-executable instructions, when executed by the computer processor, may further be used for executing a technical solution of the commodity customization method applied to the first user client or a technical solution of the commodity customization method applied to the second user client provided by any embodiment of the present invention.

### Embodiment eight

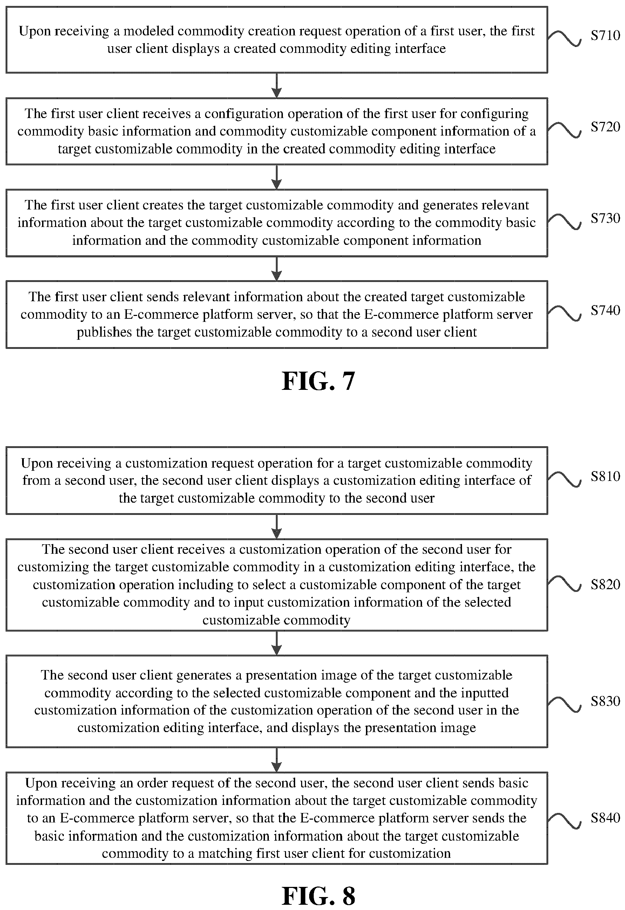

FIG. 7 is a flowchart of a commodity customization method according to embodiment eight of the present invention. As shown in FIG. 7, the method in the embodiment is implemented on a first user client and specifically includes steps described below.

In step S710, upon receiving a modeled commodity creation request operation of a first user, the first user client displays a created commodity editing interface.

In step S720, the first user client receives a configuration operation of the first user for configuring commodity basic information and commodity customizable component information of a target customizable commodity in the created commodity editing interface.

In step S730, the first user client creates the target customizable commodity and generates relevant information about the target customizable commodity according to the commodity basic information and the commodity customizable component information.

In step S740, the first user client sends relevant information about the created target customizable commodity to an E-commerce platform server, so that the E-commerce platform server publishes the target customizable commodity to a second user client.

In an embodiment, before step 710, the first user client displays a commodity creation interface.

In an embodiment, the relevant information about the target customizable commodity includes the commodity basic information and the commodity customizable component information of the target customizable commodity configured by the first user in the created commodity editing interface.

### Embodiment nine

FIG. 8 is a flowchart of a commodity customization method according to embodiment nine of the present invention. As shown in FIG. 8, the method in the embodiment is implemented on a second user client and specifically includes steps described below.

In step S810, upon receiving a customization request operation for a target customizable commodity from a second user, the second user client displays a customization editing interface of the target customizable commodity to the second user.

In step S820, the second user client receives a customization operation of the second user for customizing the target customizable commodity in a customization editing interface, the customization operation including to select a customizable component of the target customizable commodity and to input customization information of the selected customizable commodity.

In step S830, the second user client generates a presentation image of the target customizable commodity according to the selected customizable component and the inputted customization information of the customization operation of the second user in the customization editing interface, and displays the presentation image.

In step S840, upon receiving an order request of the second user, the second user client sends basic information and the customization information about the target customizable commodity to an E-commerce platform server, so that the E-commerce platform server sends the basic information and the customization information about the target customizable commodity to a matching first user client for customization.

### Embodiment ten

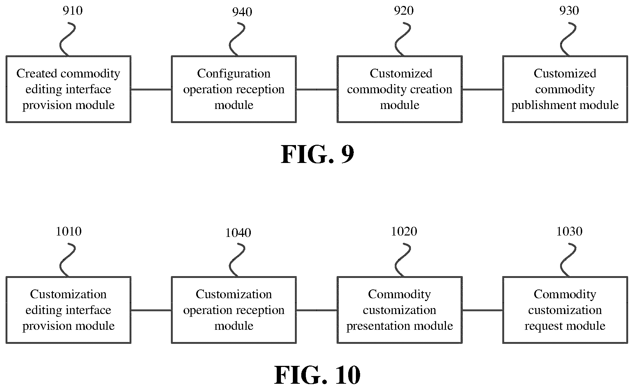

FIG. 9 is a schematic structural diagram of a commodity customization apparatus according to embodiment ten of the present invention. As shown in FIG. 9, the commodity customization apparatus is applied to a first user client and specifically includes a created commodity editing interface provision module 910, a configuration operation reception module 940, a customized commodity creation module 920 and a customized commodity publishment module 930.

The created commodity editing interface provision module 910 is configured to, upon receiving a modeled commodity creation request operation of a first user, display a created commodity editing interface.

The configuration operation reception module 940 is configured to receive a configuration operation of the first user for configuring commodity basic information and commodity customizable component information of a target customizable commodity in the created commodity editing interface.

The customized commodity creation module 920 is configured to create the target customizable commodity and generates relevant information about the target customizable commodity according to the commodity basic information and the commodity customizable component information.

The customized commodity publishment module 930 is configured to send relevant information about the created target customizable commodity to an E-commerce platform server, so that the E-commerce platform server publishes the target customizable commodity to a second user client.

### Embodiment eleven

FIG. 10 is a schematic structural diagram of a commodity customization apparatus according to embodiment eleven of the present invention. As shown in FIG. 10, the commodity customization apparatus is applied to a second user client and specifically includes a customization editing interface provision module 1010, a customization operation reception module 1040, a commodity customization presentation module 1020 and a commodity customization request module 1030.

The customization editing interface provision module 1010 is configured to, upon receiving a customization request operation for a target customizable commodity from a second user, display a customization editing interface of the target customizable commodity to the second user.

The customization operation reception module 1040 is configured to receive a customization operation of the second user for customizing the target customizable commodity in a customization editing interface, the customization operation including to select a customizable component of the target customizable commodity and to input customization information of the selected customizable commodity.

The commodity customization presentation module 1020 is configured to generate a presentation image of the target customizable commodity according to the selected customizable component and the inputted customization information of the customization operation of the second user in the customization editing interface, and display the presentation image.

The commodity customization request module 1030 is configured to, upon receiving an order request of the second user, send basic information and the customization information about the target customizable commodity to an E-commerce platform server, so that the E-commerce platform server sends the basic information and the customization information about the target customizable commodity to a matching first user client for customization.

From the above description of embodiments, it will be apparent to those skilled in the art that the present invention may be implemented by means of software and necessary general-purpose hardware, or may of course be implemented by hardware, but in many cases the former is a preferred embodiment. Based on this understanding, the technical solutions provided by the present invention substantially, or the part contributing to the related art, may be embodied in the form of a software product. The software product is stored in a computer readable storage medium, such as a computer floppy disk, a read-only memory (ROM), a random access memory (RAM), a flash, a hard disk or an optical disk, and includes several instructions for enabling a computer device (which may be a personal computer, a server or a network device) to execute the method according to each embodiment of the present invention.

It is to be noted that units and modules involved in the embodiment of the above-mentioned the commodity customization apparatus applied to the first user client or the commodity customization apparatus applied to the second user client are just divided according to functional logic, and the division is not limited to this, as long as the corresponding functions may be implemented. In addition, the specific names of the each functional unit are just intended for distinguishing, and are not to limit the protection scope of the embodiments of the present invention.

It is to be noted that the above are merely preferred embodiments of the present invention and the technical principles used therein. It will be understood by those skilled in the art that the present invention is not limited to the specific embodiments described herein. Those skilled in the art can make various apparent modifications, adaptations and substitutions without departing from the scope of the present invention. Therefore, while the present invention has been described in detail through the above-mentioned embodiments, the present invention is not limited to the above-mentioned embodiments and may include more other equivalent embodiments without departing from the concept of the present invention. The scope of the present invention is determined by the scope of the appended claims.

## Claims

1. A commodity customization method, **characterized by** comprising:
upon receiving a modeled commodity creation request initiated by a first user, providing (S110), by a first user client, a created commodity editing interface to the first user;
creating (S120), by the first user client, a target customizable commodity according to commodity basic information and commodity customizable component information configured by the first user in the created commodity editing interface; and
sending (S130), by the first user client, relevant information about the created target customizable commodity to an E-commerce platform server, to enable the E-commerce platform server to publish the target customizable commodity to a second user client.

2. The method of claim 1, wherein before creating (S120), by the first user client, the target customizable commodity according to the commodity basic information and the commodity customizable component information configured by the first user in the created commodity editing interface, the method further comprises:
receiving, by the first user client, a customization rule corresponding to each customizable component of the target customizable commodity configured by the first user in the created commodity editing interface, wherein the customization rule comprises a material customization rule and/or a lettering customization rule, and the customization rule is a criterion to be satisfied in customization of the each customizable component by a second user.

3. The method of claim 1, wherein creating (S120), by the first user client, the target customizable commodity according to the commodity basic information and the commodity customizable component information configured by the first user in the created commodity editing interface comprises:
creating, by the first user client, a presentation model of the target customizable commodity according to the commodity basic information, the commodity customizable component information and a 3D commodity model configured by the first user in the created commodity editing interface.

4. A commodity customization method, **characterized by** comprising:
upon receiving a customization request for a target customizable commodity initiated by a second user, providing (S210), by a second user client, a customization editing interface of the target customizable commodity to the second user;
generating (S220), by the second user client, a presentation image of the target customizable commodity according to a customizable component selected by the second user in the customization editing interface and customization information corresponding to the customizable component inputted by the second user, and providing the presentation image to the second user; and
upon receiving an order request of the second user, sending (S230), by the second user client, basic information and the customization information about the target customizable commodity to an E-commerce platform server, to enable the E-commerce platform server to send the basic information and the customization information about the target customizable commodity to a matching first user client for customization.

5. The method of claim 4, wherein before generating (S220), by the second user client, the presentation image of the target customizable commodity according to the customizable component selected by the second user in the customization editing interface and the customization information corresponding to the customizable component inputted by the second user, and providing the presentation image to the second user, the method further comprises:
popping up, by the second user client, a customization float layer corresponding to the customizable component according to the customizable component selected by the second user in the customization editing interface; and
acquiring, by the second user client, the customization information corresponding to the customizable component inputted by the second user in the customization float layer.

6. The method of claim 4 or 5, wherein the customization information comprises material customization information and/or lettering customization information, and the customization information conforms to a customization rule configured by a matching first user.

7. The method of claim 6, wherein the lettering customization information comprises at least one of character content customization information and character form customization information.

8. The method of claim 4, wherein generating the presentation image of the target customizable commodity and providing the presentation image to the second user comprises:
generating and providing a 3D presentation image of the target customizable commodity to the second user.

9. A commodity customization apparatus, applied to a first user client, **characterized by** comprising:
a created commodity editing interface provision module (410), which is configured for the first user client to, upon receiving a modeled commodity creation request initiated by a first user, provide a created commodity editing interface to the first user;
a customized commodity creation module (420), which is configured for the first user client to create a target customizable commodity according to commodity basic information and commodity customizable component information configured by the first user in the created commodity editing interface; and
a customized commodity publishment module (430), which is configured for the first user client to send relevant information about the created target customizable commodity to an E-commerce platform server, to enable the E-commerce platform server to publish the target customizable commodity to a second user client.

10. A commodity customization apparatus, applied to a second user client, **characterized by** comprising:
a customization editing interface provision module (510), which is configured for the second user client to, upon receiving a customization request for a target customizable commodity initiated by a second user, providing a customization editing interface of the target customizable commodity to the second user;
a commodity customization presentation module (520), which is configured for the second user client to generate a presentation image of the target customizable commodity according to a customizable component selected by the second user in the customization editing interface and customization information corresponding to the customizable component inputted by the second user, and provide the presentation image to the second user; and
a commodity customization request module (530), which is configured for the second user client to, upon receiving an order request of the second user, send basic information and the customization information about the target customizable commodity to an E-commerce platform server, to enable the E-commerce platform server to the basic information and the customization information about the target customizable commodity to a matching first user client for customization.

11. A computer device, comprising a memory, a processor, and computer programs stored in the memory and executable on the processor, wherein when executing the programs, the processor implements the method of any one of claims 1 to 3 or implements the method of any one of claims 4 to 8.

12. A computer-readable storage medium storing computer programs, wherein when executed by a processor, the programs implement the method of any one of claims 1 to 3 or implement the method of any one of claims 4 to 8.
